Europäisches Patentamt

European Patent Office

Office européen des brevets

(19)

(11) EP 0 540 385 B1

## (12) FASCICULE DE BREVET EUROPEEN

(45) Date de publication et mention
de la délivrance du brevet:
**05.03.1997 Bulletin 1997/10**

(51) Int Cl.6: **G11B 5/02**, G11B 5/008,
G11B 5/49, G11B 27/34,
G11B 20/00, G11B 21/00

(21) Numéro de dépôt: **92402790.7**

(22) Date de dépôt: **13.10.1992**

(54) **Procédé de lecture d'informations enregistrées et système de lecture**

Aufgezeichnet Informationswiedergabeverfahren und -system

Recorded information read-out method and system

(84) Etats contractants désignés:
**DE ES GB IT NL**

(30) Priorité: **29.10.1991 FR 9113314**

(43) Date de publication de la demande:
**05.05.1993 Bulletin 1993/18**

(73) Titulaire: **THOMSON-CSF**
**75008 Paris (FR)**

(72) Inventeurs:
• **Colineau, Joseph**
**F-92045 Paris La Défense (FR)**
• **Lehureau, Jean-Claude**
**F-92045 Paris La Défense (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
EP-A- 0 400 678          BE-A- 831 264
GB-A- 1 478 339          US-A- 3 158 846
US-A- 4 616 272

• **IBM TECHNICAL DISCLOSURE BULLETIN vol.
13, no. 8, Janvier 1971, ARMONK, N.Y., USA
pages 2294 - 2295 E. W. PUGH 'Multitrack
magnetic transducer with excess heads'**
• **PATENT ABSTRACTS OF JAPAN vol. 7, no. 172
(P-213)(1317) 29 Juillet 1983 & JP-A-58 077 009**
• **PATENT ABSTRACTS OF JAPAN vol. 1, no. 103
(E-77)(3309) 13 Septembre 1977 & JP-A-52 036
011**

**Description**

L'invention concerne un procédé de lecture d'informations enregistrées et un système mettant en oeuvre ce procédé. Plus particulièrement, l'invention concerne un procédé et un système permettant de lire une bande magnétique, notamment dans le domaine informatique, sur laquelle sont enregistrées plusieurs pistes d'informations sans qu'on connaisse la position exacte des têtes de lecture par rapport aux pistes. L'invention est néanmoins applicable à d'autres types d'enregistrements.

Une bande magnétique est capable de constituer un support d'information à haute densité surfacique (1 µm2 par bit sur bande Métal Evaporé). Les formats physiques d'enregistrement sur une bande peuvent être variés. Ces formats dépendent des performances requises par l'application, et sont très liés à un type de lecteur-enregistreur donné.

Notamment, les formats physiques d'enregistrement sont à classer selon trois catégories, selon le mode de balayage de la surface magnétique :

- l'enregistrement longitudinal
- l'enregistrement transversal
- l'enregistrement hélicoïdal

De plus, les pistes voisines peuvent être séparées, ou contiguës, enregistrées avec le même azimuth ou selon des azimuths différents.

Enfin l'organisation des données sur les pistes, ainsi que la façon de les représenter sur la bande (mode de modulation) sont variées.

C'est pourquoi, les enregistreurs actuels n'admettent généralement qu'un standard d'enregistrement, ou, tout au plus, des standards qui ne diffèrent que par le code de modulation utilisé.

Le mode d'utilisation le plus naturel des têtes magnétiques est celui qui consiste à affecter une tête de lecture à chacune des pistes physiques sur la bande, et à assurer, à l'aide d'un guidage mécanique suffisamment précis, ou grâce à un asservissement de position, une bonne superposition de chaque tête sur la piste correspondante.

Cependant, ce mode d'utilisation est difficilement applicable lorsque l'on veut avec une même tête lire plusieurs formats d'enregistrement voire même lire différentes bandes dont on ne connaît pas les formats d'enregistrement. De plus, la tendance étant à enregistrer les bandes avec une densité d'enregistrement élevée, il devient nécessaire d'avoir un suivi rigoureux des pistes de la bande par la tête magnétique, ce qui est difficile à obtenir.

Le document GB-A-1478339 décrit un procédé et un système de lecture utilisant un nombre de têtes légèrement supérieur au nombre de pistes. Les pistes ont une largeur et un espacement constant. La comparaison de l'intensité moyenne des signaux lus par deux têtes situées en bordure des deux pistes périphériques permet de déterminer le décalage latéral des têtes par rapport aux pistes et de reconstituer les informations enregistrées sur chaque piste à partir des signaux lus par toutes les têtes et le document EP-A-0400678 décrit un procédé et un système de lecture utilisant également un nombre de têtes supérieur au nombre de pistes. Un signal de référence enregistré sur une des pistes permet de déterminer le décalage des têtes par rapport aux pistes.

L'invention propose un procédé et un système de lecture de bande magnétique qui ne nécessite pas de suivi des pistes de la bande et qui permette de lire une bande dont on ne connaît pas la position des pistes sur la bande (par rapport à la position des têtes) c'est-à-dire dont on ne connaît pas le format d'enregistrement.

L'invention concerne donc un procédé de lecture d'informations enregistrées sur plusieurs pistes d'informations enregistrées longitudinalement sur un support d'enregistrement, comprenant les étapes suivantes :

- on dispose au moins une série de têtes de lecture élémentaires transversalement par rapport à la direction des pistes, le nombre de têtes élémentaires étant supérieur au nombre de pistes ;
- on lit avec chaque tête élémentaire toute information de la bande passant sous la tête ;

    le procédé étant caractérisé en ce que :

- on intègre, lors d'une première intégration, pour chaque tête élémentaire, la valeur absolue ou la valeur élevée au carré du signal fourni par la tête élémentaire ;
- on intègre lors d'une deuxième intégration, pour chaque paire de têtes élémentaires voisines, la valeur absolue ou la valeur élevée au carré de la somme ou du produit des signaux fournis par les deux têtes de la paire de têtes ;
- on superpose spatialement les résultats des deux opérations d'intégration précédentes de telle façon que les résultats de la deuxième intégration s'intercalent entre les résultats de la première intégration, ce qui donne un profil de valeurs ;
- on détecte dans le profil de valeurs, les maximums de valeurs et on localise ces maximums par rapport à la position des têtes élémentaires ce qui permet d'indiquer la position des têtes par rapport aux pistes du support d'enregistrement ;
- on reconstitue les informations enregistrées sur chaque piste à partir des signaux fournis par chaque tête élémentaire et de la position déterminée des têtes élémentaires par rapport aux pistes.

L'invention concerne également un système de lecture de support d'enregistrement, lequel comprend plusieurs pistes d'informations enregistrées longitudinalement, le système comprenant :

- une tête de lecture comprenant au moins une série de têtes de lecture élémentaires disposées transversalement par rapport à la direction de défilement des pistes ;

caractérisé en ce que le système comprend également :

- un premier circuit intermédiaire, connecté aux têtes de lecture élémentaires, calculant la valeur absolue ou la valeur élevée au carré des signaux fournis par chaque tête élémentaire ;
- une première série de circuits d'intégration des signaux fournis par le premier circuit intermédiaire à raison d'un circuit d'intégration par tête élémentaire ;
- un deuxième circuit intermédiaire, connecté aux têtes de lecture élémentaires, calculant la valeur absolue ou la valeur élevée au carré de la somme ou du produit des signaux fournis par chaque paire de têtes élémentaires voisines ;
- une deuxième série de circuits d'intégration des signaux fournis par le deuxième circuit intermédiaire à raison d'un circuit d'intégration commun à chaque paire de têtes élémentaires voisines ;
- un circuit de combinaison linéaire des résultats d'intégration de la première série de circuits d'intégration et de la deuxième série d'intégration permettant de déterminer la position et la largeur des pistes sur le support d'enregistrement ;
- un circuit pour reconstituer les informations enregistrées sur chaque piste à partir des signaux fournis par chaque tête élémentaire et de la position déterminée des têtes élémentaires par rapport aux pistes.

Les différents objets et caractéristiques de l'invention apparaîtront plus clairement dans la description qui va suivre faite à titre d'exemple et dans les figures annexées qui représentent :

- la figure 1, un exemple de réalisation d'un système de lecture selon l'invention ;
- les figures 2a, 2b et 3, des diagrammes explicatifs du problème résolu par l'invention ;
- les figures 4a à 4e, des diagrammes explicatifs du procédé de l'invention ;
- les figures 5a à 5c et 6a, 6b, d'autres diagrammes explicatifs montrant le décalage des têtes par rapport aux pistes de la bande magnétique ;
- la figure 7, un exemple de réalisation du système de lecture selon l'invention ;
- les figures 8 à 9, des variantes de réalisation du système selon l'invention.

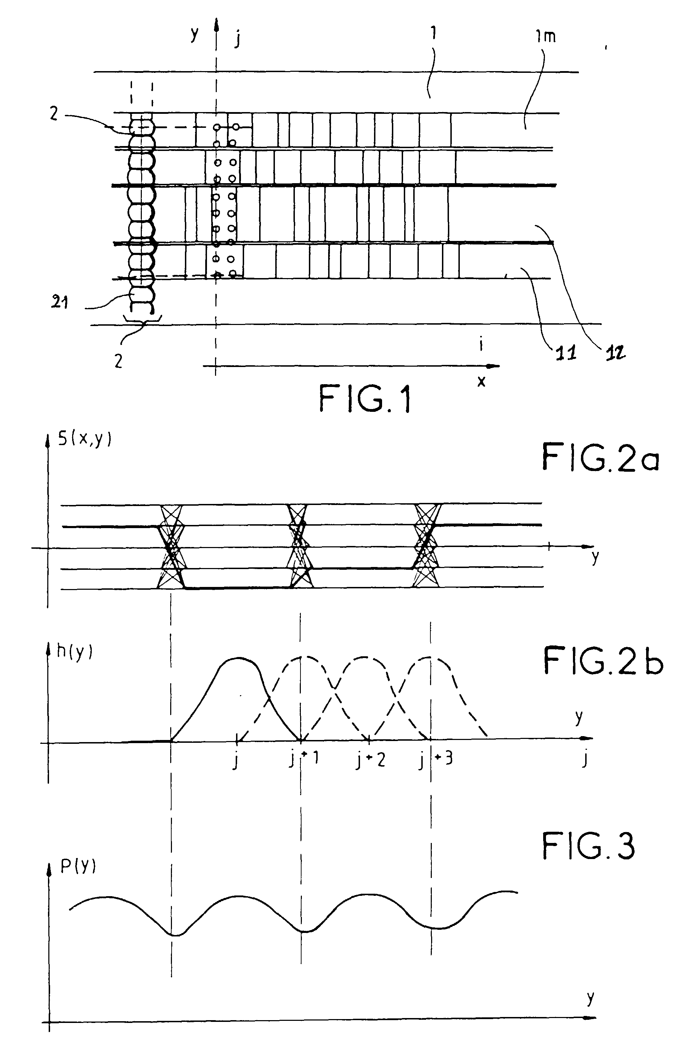

Selon l'invention, on prévoit comme cela est représenté en figure 1, pour lire une bande magnétique 1 comportant des pistes 11, ... 1m, une tête magnétique 2 comprenant différentes têtes magnétiques élémentaires 21, ... 2n disposées transversalement par rapport à la direction de défilement x de la bande.

Selon un aspect particulier de l'invention, le nombre de têtes magnétiques élémentaires 21 à 2n est de préférence supérieur au nombre de pistes 11 à 1m.

Comme cela est illustré sur la figure 1, les pistes 11 à 1m sont de largeurs différentes. Selon un mode de réalisation préféré les têtes magnétiques 21 à 2n sont identiques et lisent chacune des portions équivalentes de la bande mais cela n'est pas obligatoire dans le cadre de l'invention.

Lorsque les têtes de lecture sont disposées en ligne, on réalise une lecture de la surface de la bande magnétique "balayée" par la ligne de têtes. L'information magnétique bidimensionnelle portée par cette surface est ainsi échantillonnée à la période p dans la direction transversale par les n têtes de lecture disposées au pas p, et à la période 1 dans la direction longitudinale, 1 = v*T étant la distance parcourue par la bande pendant une période de l'horloge d'échantillonnage des têtes de lecture.

Les cercles représentent la position physique du centre des échantillons de signal mesuré sur la bande. Chaque surface d'échantillonnage est ici supposée rectangulaire, mais l'on pourra utiliser d'autres structures d'échantillonnage (en quinconce par exemple). A condition de respecter le critère de Nyquist appliqué au signal bidimensionnel, on pourra récupérer et séparer les informations des différentes pistes, sans nécessairement avoir une disposition géométrique des têtes similaire à celle des pistes magnétiques sur la bande ni un alignement rigoureux des unes par rapport aux autres.

On va maintenant décrire un autre aspect de l'invention concernant le traitement des informations lues par une barrette de têtes magnétiques élémentaires disposées transversalement par rapport à la bande magnétique.

Selon ce traitement, les têtes de lecture élémentaires lisent chacune des informations sur la bande mais au départ le système ne connaît ni l'identité des pistes lues par les têtes, ni la position de chaque tête par rapport aux pistes. On doit donc considérer globalement l'information lue à chaque instant par un ensemble de têtes élémentaires 21 à 2n. Il convient donc d'introduire une notion de dimension transversale du signal qui correspond à la lecture transversale par l'ensemble de têtes élémentaires.

Dans cette dimension transversale, le signal est échantillonné par suite de la structure discrète des têtes. Il est possible d'échantillonner le signal de manière synchrone, ou asynchrone.

Un échantillonnage synchrone correspond à un ensemble de têtes alignées avec les pistes magnétiques. Le traitement à effectuer consiste à réaliser une meilleure séparation des pistes par filtrage transversal. Ce traitement n'est possible que si l'on dispose des échantillons de signal voisins de la piste considérée. Un ensemble de têtes de lecture en ligne permet d'acquérir simultanément l'ensemble de ces échantillons, ce qui n'est pas le cas d'un ensemble de têtes réparties sur deux ou plusieurs lignes distantes, et encore moins d'un lecture à têtes tournantes, pour lequel des signaux de pistes voisines, contigus sur la bande, sont lus à des instants séparés d'un tour ou d'une fraction de tour du lecteur.

Il est également possible, comme dans la direction longitudinal, d'échantillonner l'information de manière asynchrone. Cela signifie que les têtes de lecture ne sont pas nécessairement alignées avec les pistes. C'est en particulier le cas lorsque la précision du guidage mécanique est insuffisante, et que le lecteur ne comporte pas de dispositif d'asservissement de la position des têtes. C'est également le cas lorsque le lecteur doit accepter des bandes de divers formats géométriques.

Comme dans le cas monodimensionnel, il est possible de récupérer l'information à l'aide des opérations suivantes :

- filtrage passe-bas bidimensionnel (avant échantillonnage ) ;
- échantillonnage bidimensionnel ;
- égalisation bidimensionnelle (séparation des pistes, réduction de l'interférence entre symboles sur chaque piste) ;
- décimation et/ou remise en phase.

On peut prévoir les dispositions suivantes :

- les fréquences d'échantillonnage doivent être suffisamment élevées, par exemple, supérieures au double de la fréquence de coupure du canal dans les deux directions ;

La figure 2a représente, à titre d'exemple, un signal transversal de la bande, c'est-à-dire un signal contenant les informations présentes sur les différentes pistes de la bande selon une ligne transversale de la bande correspondant à la rangée de têtes de lecture élémentaires. C'est ce signal transversal qu'il convient d'identifier alors que la position des têtes élémentaires est inconnue par rapport à ce signal.

Chaque tête de lecture élémentaire j délivre à l'instant i un signal échantillonné qui résulte de la convolution de l'information sO(x,y) enregistrée sur la bande par la "fonction d'ouverture" (ou la réponse impulsionnelle) bidimensionnelle h(x,y) de la tête. La figure 2b représente la fonction d'ouverture d'une tête élémentaire.

Soit p(j) la puissance moyenne du signal lu. Cette puissance est maximum si la tête est bien centrée sur une piste physique. La figure 3 représente l'évolution de p(y) en fonction de la position des têtes par rapport au signal à lire. Dans le cas de pistes juxtaposées sans séparation, si la puissance du signal de chaque piste est égale à 1, et si les signaux des pistes voisines sont indépendants, p(y) a une valeur comprise entre 1 (tête alignée sur le centre de la piste) et $\sqrt{2}/2$ (tête à cheval sur deux pistes).

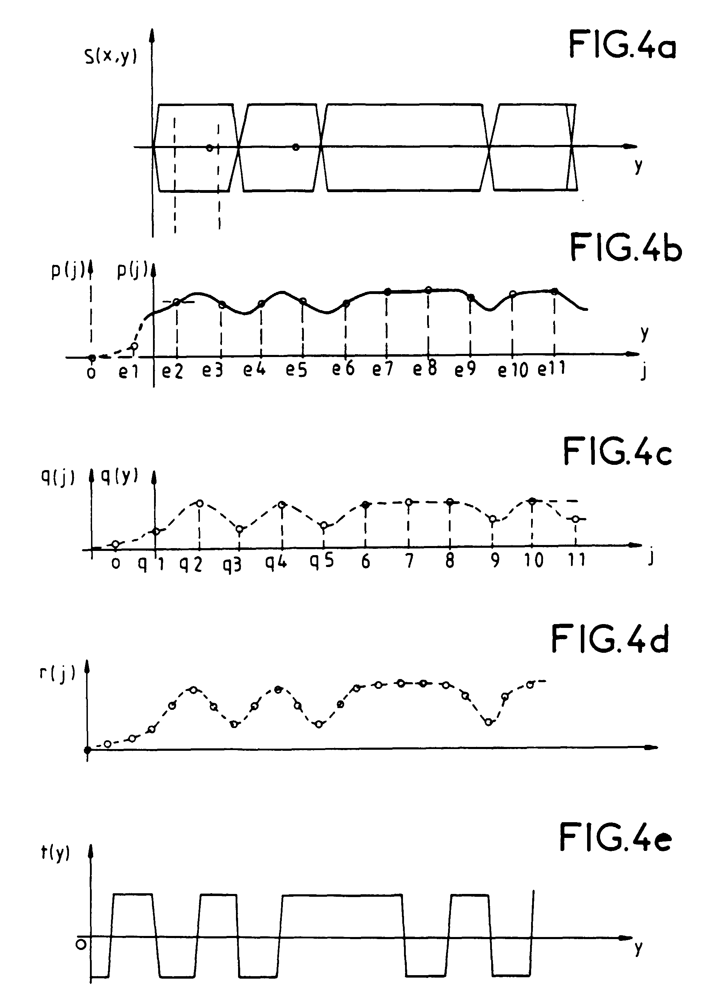

En se reportant aux figures 4a à 4e, on va décrire un exemple de procédé de lecture selon l'invention.

Selon ce procédé les échantillons du signal de lecture de chaque tête élémentaire sont filtrés pour supprimer la composante continue.

Ensuite, le signal filtré est élevé au carré puis intégré sur un nombre N d'échantillons.

Ces traitements de filtrage et d'intégration peuvent être faits de manière approximative en réalisant un filtrage de type $(1-z^{-1})$ puis en prenant la valeur absolue du résultat et en accumulant sur un temps T.

La figure 4a représente l'enveloppe possible d'un signal transversal à lire.

La figure 4b représente le signal p(y) filtré et intégré pour un nombre de têtes élémentaires déterminé (11 têtes élémentaires sur la figure 4b). Ces têtes occupent les positions indiquées e1, e2, e3, ... sur la figure 4b. Pour chaque tête, on obtient un signal intégré p(j). Chaque signal intégré qui a donc été obtenu est situé sur une courbe dessinée en pointillés représentant les différentes valeurs qu'on aurait obtenues si on avait pu soumettre l'ensemble du signal lu, de façon continue, au traitement précédent (filtrage, élévation au carré, intégration).

Dans l'exemple des figures 4a et 4b, les positions des têtes sont telles que les valeurs p(j) des signaux ne sont pas suffisamment différentes pour faire apparaître les valeurs appartenant aux différentes pistes du signal S(x,y). En effet, les têtes sont situées symétriquement par rapport aux centres des pistes et délivrent des puissances moyennes identiques. On constate donc que la connaissance de p(j) ne suffit pas pour mesurer avec précision le décalage existant entre les têtes et les pistes. Il est donc nécessaire de disposer d'un autre signal pour lever l'ambiguïté.

Pour cela, à partir des signaux délivrés à chaque instant par les différentes têtes, en considérant chaque paire de têtes prises deux à deux, on fait la somme des signaux délivrés par chaque paire de têtes et on intègre, sur un temps T, les valeurs absolues de ces sommes. On obtient le signal q(j) représenté en figure 4c. Sur la figure 4c, le signal q1 est obtenu à partir des têtes situées en positions e1 et e2, le signal q2 est obtenu à partir des têtes situées en positions e2 et e3, le signal q3 est obtenu à partir des signaux des têtes situées en positions e3 et e4, etc.

Un signal q(j) également utilisable peut être obtenu par calcul de la puissance (élévation au carré) des signaux de têtes voisines (s1(i,j) +s1(i,j+1)).

La courbe de signaux présente un maximum pour q2 par exemple (figure 4c) permettant de reconnaître que les têtes e2 et e3 lisent des signaux provenant de la même piste, contrairement à e3 et e4 par exemple où le signal q3 est minimum.

L'on peut aussi définir q(j) comme le produit de s1 (i,j) par s1(i,j+1). Dans ce cas, et avec les mêmes hypothèses que pour p(y), la valeur de q(j) pourra varier entre 1 et 0, suivant la position des têtes. Des algorithmes simplifiés permettent une estimation de q(j) sans nécessiter trop de puissance de calcul.

L'on peut alors constituer un signal r(j') par combinaison linéaire de p(j) et q(j). Le signal obtenu est représenté en figure 4d. Ce signal est une bonne représentation de p(y) avec deux fois plus d'échantillons que sur le signal p(j).

L'erreur de position des pistes peut alors être calculée par l'intercorrélation du signal r(j') et de la fonction t(j') qui représente la position physique des pistes sur la bande (figure 4e).

Elle s'exprime à partir des transformées de Fourier P(v) et T(v) obtenues par FFT, par

$$G(v)=P(v).T(v)$$

et

$$g(y)= F(G(v))$$

L'on pourra aussi utiliser la méthode de corrélation de phase qui consiste à normaliser G(v) par P(v). T(v).

$$G(v) = P(v).T(v)/P(v).T(v)$$

et

$$g(y) = F(G(v))$$

La position du pic de corrélation donne la position relative des pistes par rapport aux têtes.

Si le décalage est faible, ou si sa valeur approximative est connue (par exemple par un calcul précédent), il suffit de calculer quelques points de la fonction d'intercorrélation. Un calcul direct est alors plus simple, surtout si l'on décrit la position des pistes par une fonction t(j') prenant uniquement les valeurs +1 et -1 ou encore +1, 0, -1.

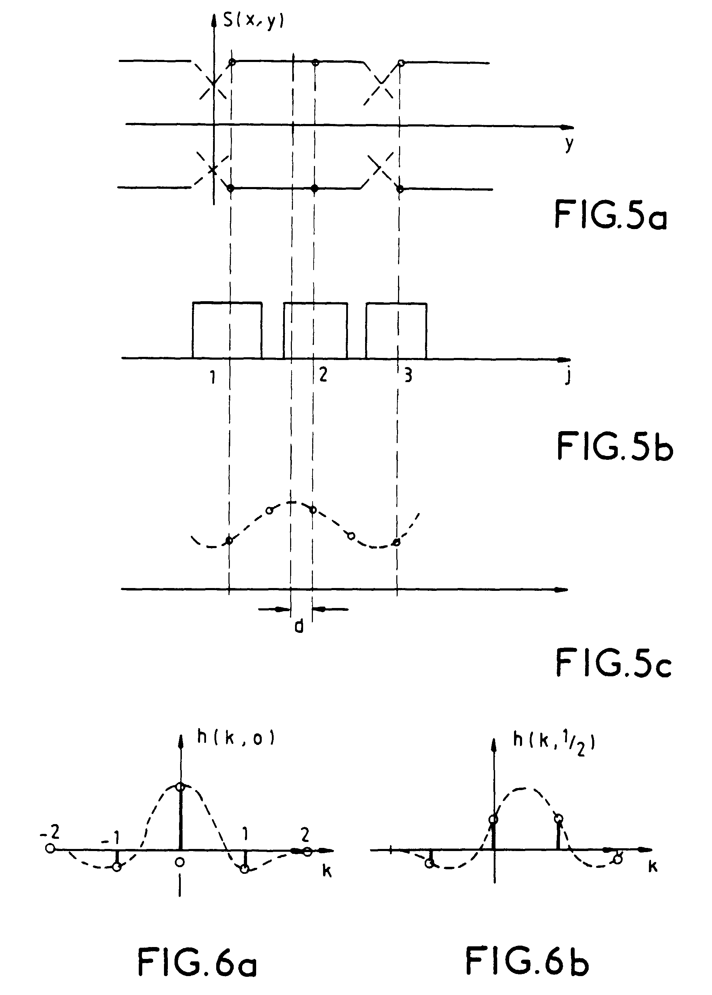

Dans le cas particulier de pistes de même largeur avec un pas constant, le signal t(y) est périodique. Il n'est plus nécessaire de connaître le décalage absolu entre pistes et têtes, mais seulement d'évaluer la position des têtes par rapport aux pistes les plus proches. Le calcul peut alors être fait sur un petit nombre de têtes voisines (par exemple 3 comme cela est représenté sur la figure 5b). On dispose alors de 5 valeurs de points sur la courbe de r(j') et l'on peut, par interpolation, calculer la position du maximum de r(y) (figure 5c).

Connaissant le décalage d des têtes de lecture par rapport aux pistes physiques, on peut recaler les échantillons dans la direction transversale en les filtrant par un filtre h(k,d) (figures 6a et 6b) dont les coefficients dépendent du décalage de d.

Dans le cas plus compliqué où on ne connaît pas le format d'enregistrement et où les pistes ne sont pas de même largeur, il faut exploiter la totalité du signal r (y) de la figure 4d pour déterminer la largeur des pistes et leur position. On détectera ainsi le format selon lequel les informations sont enregistrées sur la bande et on pourra, d'une part, calculer le décalage existant entre les têtes et les pistes et d'autre part décoder la lecture de la bande.

Dans ce qui précède, on a décrit un procédé selon l'invention permettant de localiser les têtes par rapport aux pistes de la bande.

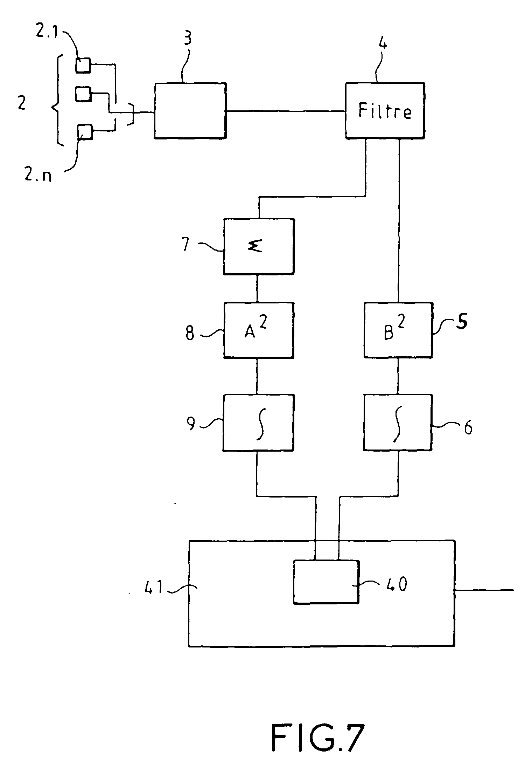

La figure 7 représente un système permettant de mettre en oeuvre ce procédé.

Ce système décrit un circuit de lecture 3 connecté aux têtes magnétiques élémentaires 21 à 2.n lisant les n têtes en parallèle. Un circuit de filtrage 4 reçoit du circuit de lecture 3 les échantillons de signaux lus et permet d'éliminer de ces signaux la composante continue. Un circuit 5 d'élévation au carré reçoit les différents échantillons de signaux filtrés et les élève au carré. Ou bien le circuit 5 peut se contenter de prendre la valeur absolue des signaux filtrés. Un circuit 6 d'intégration intègre sur un temps T les échantillons des signaux traités par le circuit 5. Le circuit 6 délivre alors un signal p(y) tel que représenté en figure 4b.

Par un ensemble de circuits d'addition 7 à raison d'un circuit pour deux têtes élémentaires chaque circuit d'addition fait la somme des échantillons de signaux qu'il reçoit. Ensuite les circuits 8 transforment chaque somme en valeur absolue, ou bien l'élèvent au carré. Un circuit d'intégration 9 intègre les signaux reçus des circuits 8.

Un circuit de combinaison 40 enregistre ensuite de façon imbriquée les valeurs des signaux fournis par les circuits d'intégration 6 et 9. Enfin un circuit de traitement 41 détecte dans le circuit de combinaison 40 à partir des valeurs enregistrées les maximas des courbes telles que représentées en figure 4d et, pour chaque maxima, la position géographique de ce maxima par rapport à une largeur de bande magnétique et sa distance d à la tête magnétique la plus proche (voir figure 5c).

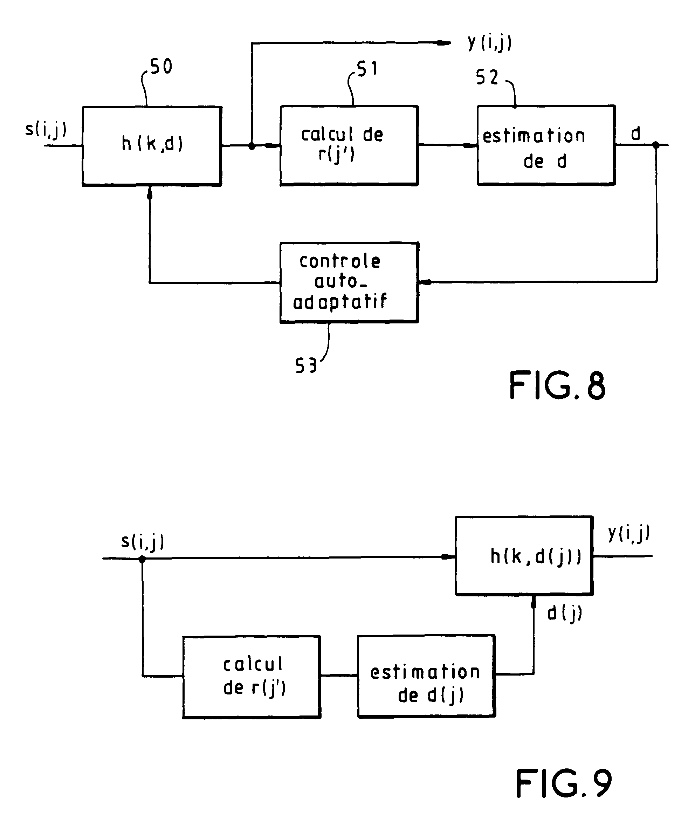

La figure 8 représente une variante de réalisation dans lequel, le circuit 50 représente le circuit de lecture des têtes magnétiques, le circuit 51 représente le circuit de calcul de la courbe r(j') de la figure 4d, le circuit 52 représente le circuit de calcul de la distance d (figure 5c). A ces circuits est ajouté un circuit 53 de contrôle auto-adaptatif.

Ce circuit de contrôle modifie un à un les coefficients du filtre selon un algorithme auto-convergent (par exemple gradient) de manière à minimiser le décalage d calculé.

Par ailleurs, si le média d'enregistrement est susceptible de se déformer, le décalage d peut évoluer sur toute la largeur de la bande. L'on devra alors calculer d (y) en un nombre suffisant de points en effectuant les calculs précédents sur des fractions de la largeur d totale, et en interpolant pour obtenir d(j) pour chaque tête j. Les coefficients du filtre de recalage h(k,d(j)) seront alors actualisés à chaque nouvel échantillon traité (figure 9).

La fonction t(j') représentant la géométrie des pistes du standard à lire est sélectionnée. Le recalage des pistes s'effectue comme ci-dessus.

Un automate calcule le signal des pistes de largeur supérieure ou égale à 2 échantillons en additionnant tous les échantillons relatifs à une piste. Il utilise pour ce faire un tableau d'affectation des échantillons aux pistes physiques. Ce tableau est directement dérivé de la fonction t(j').

Les signaux des pistes physiques étant ainsi reconstitués, le traitement du signal se poursuit comme dans le cas monodimensionnel.

Comme on l'a mentionné précédemment, le système peut ne pas connaître le format d'enregistrement de la bande. La fonction r(j') décrite ci-dessus est alors déterminée sans connaissance à priori de la géométrie des pistes. Cette fonction est très semblable à t(j') et peut être utilisée après filtrage pour déterminer le format physique d'un enregistrement inconnu. L'on en déduit t(j') et l'on peut alors effectuer les traitements précédemment décrits.

Le procédé et le système de l'invention permettent donc la lecture de médias d'enregistrement multipistes à l'aide d'un ensemble de têtes en ligne. Ils permettent :

- de restituer des signaux de lecture séparés au mieux, même si les têtes de lecture ne sont pas alignées avec les pistes ;
- de compenser des déformations de la bande induisant des décalages différents d'un bord de la bande à l'autre ;
- de reconnaître automatiquement un format d'enregistrement.

Il trouve un intérêt particulièrement dans les enregistreurs à haute densité de pistes, où le suivi de piste et les déformations de la bande posent problème.

Il est également utilisable dans des lecteurs multistandards, par exemple des périphériques d'ordinateurs (dérouleurs de bandes) qui peuvent ainsi relire des copies de sauvegarde enregistrées selon des standards inconnus voire très anciens.

La description qui précède n'a été faite qu'à titre d'exemple. D'autres variantes peuvent être envisagées sans sortir du cadre de l'invention. Notamment, la description se réfère à une lecture de bande magnétique mais elle serait applicable également à la lecture de tout type d'informations autres que magnétiques, enregistrées sur un autre type de support (disque ou carte par exemple). Egalement, on doit prévoir un nombre de tête de lecture supérieur au nombre de pistes à lire. On peut prévoir, par exemple, que le nombre de têtes est sensiblement égal à deux fois le nombre de pistes.

## Revendications

1. Procédé de lecture d'informations enregistrées sur plusieurs pistes d'informations (11 à 1.m) enregistrées longitudinalement sur un support d'enregistrement (1), comprenant les étapes suivantes :

- on dispose au moins une série de têtes de lecture (21 à 2.n) élémentaires transversalement par rapport à la direction des pistes, le nombre de têtes élémentaires étant supérieur au nombre de pistes ;
- on lit avec chaque tête élémentaire toute information de la bande passant sous la tête ;

  le procédé étant caractérisé en ce que :

- on intègre, lors d'une première intégration, pour chaque tête élémentaire, la valeur absolue ou la valeur élevée au carré du signal fourni par la tête élémentaire ;
- on intègre lors d'une deuxième intégration, pour chaque paire de têtes élémentaires voisines, la valeur absolue ou la valeur élevée au carré de la somme ou du produit des signaux fournis par les deux têtes de la paire de têtes ;
- on superpose spatialement les résultats des deux opérations d'intégration précédentes de telle façon que les résultats de la deuxième intégration s'intercalent entre les résultats de la première intégration, ce qui donne un profil de valeurs ;
- on détecte dans le profil de valeurs, les maximums de valeurs et on localise ces maximums par rapport à la position des têtes élémentaires ce qui permet d'indiquer la position des têtes par rapport aux pistes du support d'enregistrement ;
- on reconstitue les informations enregistrées sur chaque piste à partir des signaux fournis par chaque tête élémentaire et de la position déterminée des têtes élémentaires par rapport aux pistes.

2. Procédé selon la revendication 1, dans lequel le support d'enregistrement (1) est un support d'enregistrement magnétique et que les têtes de lecture sont des têtes de lecture magnétiques.

3. Procédé selon la revendication 1 dans lequel le support d'enregistrement est une bande magnétique et les pistes sont enregistrées selon le sens longitudinal de la bande magnétique.

4. Système de lecture de support d'enregistrement, lequel comprend plusieurs pistes d'informations (11 à 1m) enregistrées longitudinalement, le système comprenant :

- une tête de lecture (2) comprenant au moins une série de têtes de lecture élémentaires (21 à 2n) disposées transversalement par rapport à la direction de défilement des pistes (11 à 1m) ;

caractérisé en ce que le système comprend également :

- un premier circuit intermédiaire (5), connecté aux têtes de lecture élémentaires (21 à 2n), calculant la valeur absolue ou la valeur élevée au carré des signaux fournis par chaque tête élémentaire ;
- une première série de circuits d'intégration (6) des signaux fournis par le premier circuit intermédiaire (5) à raison d'un circuit d'intégration par tête élémentaire ;
- un deuxième circuit intermédiaire (7, 8), connecté aux têtes de lecture élémentaires (21 à 2n), calculant la valeur absolue ou la valeur élevée au carré de la somme ou du produit des signaux fournis par chaque paire de têtes élémentaires voisines ;
- une deuxième série de circuits d'intégration (9) des signaux fournis par le deuxième circuit intermédiaire (7, 8) à raison d'un circuit d'intégration commun à chaque paire de têtes élémentaires voisines ;
- un circuit de combinaison linéaire des résultats (40) d'intégration de la première série de circuits d'intégration et de la deuxième série d'intégration permettant de déterminer la position (d) et la largeur des pistes sur le support d'enregistrement ;
- un circuit pour reconstituer les informations enregistrées sur chaque piste à partir des signaux fournis par chaque tête élémentaire et de la position déterminée des têtes élémentaires par rapport aux pistes.

5. Système de lecture selon la revendication 4, caractérisé en ce que le nombre de têtes élémentaires est supérieur au nombre de pistes.

6. Système de lecture selon la revendication 5, caractérisé en ce que le nombre de têtes élémentaires est au moins égal à deux fois le nombre de pistes.

7. Système de lecture selon la revendication 4, caractérisé en ce qu'il comprend un circuit de filtrage (4) connecté entre les têtes de lecture (2) et les circuits d'intégration (6, 7) et un circuit de contrôle auto-adaptatif recevant, du circuit de combinaison (40), la position (d) des pistes sur le support d'enregistrement et modifiant en retour les caractéristiques du circuit de filtrage (1).

8. Système de lecture selon la revendication 4, caractérisé en ce que le support d'enregistrement est un support magnétique et que les têtes de lecture sont des têtes magnétiques.

**Patentansprüche**

1. Verfahren zum Lesen von Informationen, die in mehreren Informationsspuren (11 bis 1.m) aufgezeichnet sind, die ihrerseits auf einem Aufzeichnungsträger (1) longitudinal aufgezeichnet sind, mit den folgenden Schritten:

- Anordnen wenigstens einer Reihe von elementaren Leseköpfen (21 bis 2.n) in einer zur Richtung der Spuren transversalen Richtung, wobei die Anzahl der elementaren Köpfe größer als die Anzahl der Spuren ist;
- Lesen der gesamten Information des unter jedem Kopf sich vorbeibewegenden Bandes mit dem entsprechenden Kopf;

wobei das Verfahren dadurch gekennzeichnet ist, daß:

- bei einer ersten Integration für jeden elementaren Kopf der Absolutwert oder der zum Quadrat erhobene Wert des vom elementaren Kopf gelieferten Signals integriert wird;
- bei einer zweiten Integration für jedes Paar von benachbarten elementaren Köpfen der Absolutwert oder der zum Quadrat erhobene Wert der Summe oder des Produkts der von den zwei Köpfen des Kopfpaares gelieferten Signale integriert wird;
- die Ergebnisse der zwei vorangehenden Integrationsoperationen in der Weise räumlich überlagert werden, daß die Ergebnisse der zweiten Integration zwischen die Ergebnisse der ersten Integration eingefügt sind, was ein Werteprofil ergibt;
- im Werteprofil die Maxima der Werte erfaßt werden und diese Maxima in bezug auf die Position der elementaren Köpfe lokalisiert werden, was ermöglicht, die Position der Köpfe in bezug auf die Spuren des Aufzeichnungsträgers anzugeben;
- die in jeder Spur aufgezeichneten Informationen anhand der von jedem elementaren Kopf gelieferten Signale und anhand der bestimmten Position der elementaren Köpfe in bezug auf die Spuren wiederhergestellt werden.

2. Verfahren nach Anspruch 1, in dem der Aufzeichnungsträger (1) ein magnetischer Aufzeichnungsträger ist und die Leseköpfe magnetische Leseköpfe sind.

3. Verfahren nach Anspruch 1, in dem der Aufzeichnungsträger ein Magnetband ist und die Spuren in Längsrichtung des Magnetbandes aufgezeichnet sind.

4. System zum Lesen eines Aufzeichnungsträgers, der mehrere Informationsspuren (11 bis 1m) enthält, die longitudinal aufgezeichnet sind, wobei das System enthält:

   - einen Lesekopf (2) mit wenigstens einer Reihe von elementaren Leseköpfen (21 bis 2n), die in einer in bezug auf die Richtung der Vorbeibewegung der Spuren (11 bis 1m) transversalen Richtung angeordnet sind;

   dadurch gekennzeichnet, daß das System außerdem enthält:

   - eine erste Zwischenschaltung (5), die an die elementaren Leseköpfe (21 bis 2n) angeschlossen ist und den Absolutwert oder den zum Quadrat erhobenen Wert der von jedem elementaren Kopf gelieferten Signale berechnet;
   - eine erste Reihe von Integrationsschaltungen (6) für die von der ersten Zwischenschaltung (5) gelieferten Signale, wobei pro elementaren Kopf eine Integrationsschaltung vorhanden ist;
   - eine zweite Zwischenschaltung (7, 8), die an die elementaren Leseköpfe (21 bis 2n) angeschlossen ist und den Absolutwert oder den zum Quadrat erhobenen Wert der Summe oder des Produkts der von jedem Paar von benachbarten elementaren Köpfen gelieferten Signale berechnet;
   - eine zweite Reihe von Integrationsschaltungen (9) für die von der zweiten Zwischenschaltung (7, 8) gelieferten Signale, wobei für jedes Paar von benachbarten elementaren Köpfen eine gemeinsame Integrationsschaltung vorhanden ist;
   - eine Schaltung (40) für die lineare Kombination der Integrationsergebnisse der ersten Reihe von Integrationsschaltungen und der zweiten Integrationsreihe, die die Bestimmung der Position (d) und der Breite der Spuren auf dem Aufzeichnungsträger ermöglicht;
   - eine Schaltung zum Wiederherstellen der in jeder Spur aufgezeichneten Informationen anhand der von jedem elementaren Kopf gelieferten Signale und der bestimmten Position der elementaren Köpfe in bezug auf die Spuren.

5. Lesesystem nach Anspruch 4, dadurch gekennzeichnet, daß die Anzahl der elementaren Köpfe größer als die Anzahl der Spuren ist.

6. Lesesystem nach Anspruch 5, dadurch gekennzeichnet, daß die Anzahl der elementaren Köpfe wenigstens gleich doppelt so groß wie die Anzahl der Spuren ist.

7. Lesesystem nach Anspruch 4, dadurch gekennzeichnet, daß es eine Filterungsschaltung (4), die zwischen den Leseköpfen (2) und den Integrationsschaltungen (6, 7) angeschlossen ist, und eine selbstanpassende Steuerschaltung enthält, die von der Kombinationsschaltung (40) die Position (d) der Spuren auf dem Aufzeichnungsträger empfängt und im Gegenzug die Eigenschaften der Filterungsschaltung (1) modifiziert.

8. Lesesystem nach Anspruch 4, dadurch gekennzeichnet, daß der Aufzeichnungsträger ein Magnetträger ist und die Leseköpfe Magnetköpfe sind.

**Claims**

1. Method of reading data recorded on a plurality of data tracks (11 to 1.m) recorded longitudinally on a recording medium (1), comprising the following steps:

   - at least one series of elementary read heads (21 to 2.n) are arranged transversely with respect to the direction of the tracks, the number of elementary heads being greater than the number of tracks;
   - all data on the tape passing under the head are read with each elementary head;

   the method being characterized in that:

   - in a first integration, the absolute value or the value raised to the second power of the signal delivered by the elementary head is integrated for each elementary head;
   - in a second integration, the absolute value or the value raised to the second power of the sum or of the product of the signals delivered by the two heads in the pair of heads is integrated for each pair of adjacent elementary heads;
   - the results of the two preceding integration operations are spatially superposed so that the results of the second integration are interposed between the results of the first integration, which gives a value profile;
   - the value maxima are detected in the value profile, and these maxima are located with respect to the position of the elementary heads, which makes it possible to indicate the position of the heads with respect to the tracks on the recording medium;
   - the data recorded on each track are reconstructed from the signals delivered by each elementary head and from the determined position of the elementary heads with respect to the tracks.

2. Method according to Claim 1, in which the recording medium (1) is a magnetic recording medium and the read heads are magnetic read heads.

3. Method according to Claim 1, in which the recording medium is a magnetic tape and the tracks are recorded along the longitudinal direction of the magnetic tape.

4. System for reading a recording medium which comprises a plurality of longitudinally recorded data tracks (11 to 1m), the system comprising:

- a read head (2) comprising at least one series of elementary read heads (21 to 2n) arranged transversely with respect to the direction of advance of the tracks (11 to 1m);

    characterized in that the system also comprises:

- a first intermediate circuit (5), connected to the elementary read heads (21 to 2n), calculating the absolute value or the value raised to the second power of the signals delivered by each elementary head;
- a first series of circuits (6) for integrating the signals delivered by the first intermediate circuit (5) in the ratio of one integration circuit per elementary head;
- a second intermediate circuit (7, 8), connected to the elementary read heads (21 to 2n), calculating the absolute value or the value raised to the second power of the sum or of the product of the signals delivered by each pair of adjacent elementary heads;
- a second series of circuits (9) for integrating the signals delivered by the second intermediate circuit (7, 8) in the ratio of one integration circuit common to each pair of adjacent elementary heads;
- a circuit (40) for linear combination of the integration results of the first series of integration circuits and of the second integration series, making it possible to determine the position (d) and the width of the tracks on the recording medium;
- a circuit for reconstructing the data recorded on each track from the signals delivered by each elementary head and from the determined position of the elementary heads with respect to the tracks.

5. Read system according to Claim 4, characterized in that the number of elementary heads is greater than the number of tracks.

6. Read system according to Claim 5, characterized in that the number of elementary heads is at least equal to twice the number of tracks.

7. Read system according to Claim 4, characterized in that it comprises a filtering circuit (4), connected between the read heads (2) and the integration circuits (6, 7) and a self-adapting control circuit which receives, from the combination circuit (40), the position (d) of the tracks on the recording medium, and in return modifies the characteristics of the filtering circuit (1).

8. Read system according to Claim 4, characterized in that the recording medium is a magnetic medium, and in that the read heads are magnetic heads.

FIG.1

FIG.2a

FIG.2b

FIG.3

# FIG.4a

# FIG.4b

# FIG.4c

# FIG.4d

# FIG.4e

$S(x,y)$

**FIG.5a**

$j$

1   2   3

**FIG.5b**

$d$

**FIG.5c**

$h(k,o)$

-2   -1   o   1   2   $k$

$h(k,\frac{1}{2})$

$k$

**FIG.6a**

**FIG.6b**

FIG.7

FIG.8

FIG.9